Europäisches Patentamt

European Patent Office

Office européen des brevets

(11) Veröffentlichungsnummer: **0 291 708 B1**

(12) **EUROPÄISCHE PATENTSCHRIFT**

(45) Veröffentlichungstag der Patentschrift: **07.08.91**

(51) Int. Cl.5: **G01P 5/00**

(21) Anmeldenummer: **88106249.1**

(22) Anmeldetag: **20.04.88**

(54) **Vorrichtung zur Messung der Geschwindigkeit von lichtstreuenden bewegten Objekten.**

(30) Priorität: **15.05.87 DE 3716249**
**30.10.87 DE 3736805**

(43) Veröffentlichungstag der Anmeldung:
**23.11.88 Patentblatt 88/47**

(45) Bekanntmachung des Hinweises auf die
Patenterteilung:
**07.08.91 Patentblatt 91/32**

(84) Benannte Vertragsstaaten:
**AT BE CH DE FR GB IT LI NL SE**

(56) Entgegenhaltungen:
**DE-A- 3 435 423**
**US-A- 3 996 492**

**APPLIED PHYSICS LETTERS, Band 33, Nr. 8,
15. Oktober 1978, Seiten 702-704, American
Institute of Physics, New York, US; D.R. SCI-
FRES et al.: "Beam scanning with twin-stripe
injection lasers"**

(73) Patentinhaber: **Bundesrepublik Deutschland,
vertreten durch den Bundesminister für
Wirtschaft, dieser vertreten durch den Präsidenten
der Physikalisch-Technischen Bundesanstalt Bundesallee 100
W-3300 Braunschweig(DE)**

(72) Erfinder: **Dopheide, Dietrich, Dr. rer. nat.
Leimenweg 7
W-3300 Braunschweig(DE)**
Erfinder: **Faber, Michael, Dipl.-Ing.
Wilhelmshavener Strasse 27
W-3300 Braunschweig(DE)**
Erfinder: **Reim, Gerhard, Dipl.-Ing.
Suhkamp 9
W-3301 Rothemühle(DE)**
Erfinder: **Taux, Günter, Dipl.-Phys.
Weinbergstrasse 9
W-3300 Braunschweig(DE)**

(74) Vertreter: **Lins, Edgar, Dipl.-Phys.
Patentanwälte Gramm + Lins Theodor-
Heuss-Strasse 2
W-3300 Braunschweig(DE)**

## Beschreibung

Die Erfindung betrifft eine Vorrichtung zur Messung der Geschwindigkeit von lichtstreuenden bewegten Objekten mittels Laserstrahlen, mit denen am Meßort eine periodische Intensitätsverteilung erzeugt wird, und mittels einer Detektionseinrichtung für vom Objekt gestreutes Licht.

Derartige Vorrichtungen sind als Laser-Anemometer bekannt. Sie dienen insbesondere zur Messung von Strömungsgeschwindigkeiten, wobei das strömende Fluid lichtstreuende Partikel aufweist. Die periodische Intensitätsverteilung wird in bekannter Technik dadurch erzeugt, daß zwei kohärente Laser-Teilstrahlen am Meßort ein virtuelles Interferenzmuster erzeugen. Aufgrund des Dopplereffektes ist die Pulsfolgefrequenz für das von dem den Meßort durchquerenden Partikel gestreute Licht geschwindigkeitsabhängig. Die Frequenzen können in bekannter Technik mit der Detektionseinrichtung für das vom Objekt gestreute Licht ausgewertet werden.

Um ein stabiles Interferenzmuster am Meßort zu erzeugen, muß das Licht der Teilstrahlen eine ausreichende Kohärenzlänge aufweisen, so daß in der Praxis bisher aufwendige Laser mit großem Platzbedarf verwendet worden sind. Durch die DE-OS 34 35 423 ist es bereits bekannt geworden, auch Laserdioden einzusetzen, wobei besondere Maßnahmen getroffen worden sind, um eine ausreichende Kohärenzlänge für das von den Laserdioden ausgesandte Licht zu erhalten und am Meßort ein stabiles Interferenzmuster zu erzeugen. Die Messungen sind in jedem Fall stark von äußeren Einflüssen abhängig, die durch entsprechende Regelmechanismen konstant gehalten werden müssen.

Der Erfindung liegt demgegenüber die Aufgabe zugrunde, eine Vorrichtung der eingangs erwähnten Art so auszubilden, daß eine Messung auf kleinstem Raum möglich ist, die von äußeren Einflüssen vergleichsweise unabhängig ist.

Diese Aufgabe wird erfindungsgemäß mit einer Vorrichtung der eingangs erwähnten Art dadurch gelöst, daß eine reelle periodische Intensitätsverteilung mit einem Laserdioden-Array erzeugt wird, auf dem eine Mehrzahl von Laserdioden in einem definierten Abstand voneinander angeordnet sind und dessen ausgesandtes Licht mit einer Fokussierungsoptik auf den Meßort fokussiert wird.

Die erfindungsgemäße Vorrichtung beruht daher auf einem anderen und überraschend einfachen Prinzip der Erzeugung der periodischen Intensitätsverteilung am Meßort. Während bisher das Licht einer einzigen Laserquelle regelmäßig in zwei Teilstrahlen aufgeteilt worden ist, um das Interferenzmuster zu erzeugen, benötigt die erfindungsgemäße Vorrichtung lediglich einen einzigen Strahl, der allerdings aus einer Vielzahl von in definierten Abständen zueinander angeordneten Laserdioden eines Laserdioden-Arrays stammt. Durch die Fokussierungsoptik wird das Licht der Mehrzahl von Laserdioden auf den Meßort abgebildet, so daß am Meßort ein relles periodisches System von Intensitätsmaxima entsteht, die einen Abstand von

$$\Delta x = M \cdot s$$

aufweisen, wobei s den Abstand der Laserdioden auf dem Laserdioden-Array und M den Abbildungsmaßstab bezeichnet.

Die Intensitätsmaxima bilden - im Gegensatz zum Laser-Anemometer - am Meßort ein reelles System von Lichtschranken, die von dem bewegten Objekt durchlaufen werden. Das beim Durchqueren der Lichtschranken gestreute Licht ist mit der Pulsfolgefrequenz $f_p$ moduliert, wobei gilt

$$f_p = v/\Delta x.$$

v bezeichnet die Geschwindigkeit des bewegten Teilchens.

Für die Auswertung kann sowohl auf das vorwärts gestreute Licht als auch auf das rückwärts gestreute Licht zurückgegriffen werden. Besonders die Auswertung der Streuung in Rückwärtsrichtung ermöglicht sehr kleine Sende- und Empfangsvorrichtungen zur Messung von Strömungsgeschwindigkeiten. Die erfindungsgemäße Vorrichtung zeichnet sich durch einen extrem einfachen Aufbau der Meßanordnung aus, bei der nur ein Sendestrahl benötigt wird. Zur Messung von Strömungsgeschwindigkeiten sind nur sehr kleine Sichtscheiben von einigen Millimetern Durchmesser erforderlich, so daß der Einsatz in schwer zugänglichen Gebieten möglich ist. Die Kohärenzforderungen an das Licht sind minimal. Es kann auch nicht-kohärentes Licht verwendet werden Das erfindungsgemäße Verfahren kann auch zur Messung der Geschwindigkeit von Festkörper-Oberflächen verwendet werden, wobei die Auswertung des rückwärts gestreuten Lichtes erfolgt.

Da Laserdioden-Arrays mit sehr hoher Ausgangsleistung realisierbar sind, können auch Hochgeschwindigkeitsmessungen durchgeführt werden. Bereits Submicron-Partikel reichen aus, um die Strömungs-messung durchzuführen.

Die erfindungemäße Vorrichtung ermöglicht in einfacher Weise auch zweidimensionale Geschwindigkeitsmessungen, indem zweidimensionale mehrstreifige Arrays (multi stripe arrays) eingesetzt werden.

In einer sehr vorteilhaften Ausführungform strahlt das Laserdioden-Array an wenigstens einem solchen Platz einer Laserdiode nicht aus, daß eine unsymmetrische Intensitätsverteilung am Meßort erzeugt wird.

Die Anordnung der Laserdioden in einem linearen Laserdioden-Array wird so erfolgen, daß das Partikel regelmäßig die periodische Intensitätsverteilung, die als eine Mehrzahl von Lichtschranken angesehen werden kann, komplett durchläuft. Demzufolge entsteht ein Streulichtsignal, das eine periodische Intensitätsverteilung entsprechend den Lichtschranken aufweist. Ist nun eine der Lichtschranken unwirksam, entsteht ein charakteristisches Streulichtverhalten. Wenn erfindungsgemäß das Laserdioden-Array an einem solchen Platz einer Laserdiode nicht strahlt, daß eine unsymmetrische Intensitätsverteilung entsteht, werden unterschiedliche Intensitätsverteilungen des gestreuten Lichts für entgegengesetzte Strömungsrichtungen der Partikel erhalten. Demzufolge ermöglicht die erfindungsgemäße Ausbildung des Laserdioden-Arrays in einfacher Weise eine Richtungsdiskriminierung für die Bewegung der Partikel, die bisher nur außerordentlich schwierig zu erhalten war. Es ist ohne weiteres ersichtlich, daß eine derartige Richtungsdiskriminierung bei den bisherigen, durch Interferenz erzeugten statischen virtuellen Intensitätsverteilungen nicht möglich ist. Erst die Verwendung der Laserdioden-Arrays macht die erfindungsgemäße unsymmetrische Intensitätsverteilung am Meßort in einfacher Weise möglich.

Vorzugsweise wird der Platz, an dem das Laserdioden-Array nicht ausstrahlt, im mittleren Bereich des Laserdioden-Arrays gewählt, weil dadurch die Erkennung des Meßsignals erleichtert wird.

Es ist möglich, die Ausstrahlung einer Leuchtdiode des Laserdioden-Arrays zu unterdrücken. Es ist jedoch auch möglich, an sich defekte Laserdioden-Arrays zu verwenden, bei denen eine oder mehrere Laserdioden nicht ausstrahlen, sofern dadurch eine unsymmetrische Anordnung für die verschiedenen Strömungsrichtungen gewährleistet ist. Die Unsymmetrie-Forderung führt dazu, daß bei einem Laserdioden-Array der erfindungsgemäße Effekt nicht erzielt wird, wenn eine Randdiode oder bei einer ungeraden Anzahl von Laserdioden die mittlere Diode unterdrückt wird.

Analoges gilt für zweidimensionale Laserdioden-Arrays.

In einer vorteilhaften Ausführungsform besteht das Laserdioden-Array aus Laserdioden, deren Abstrahlrichtung durch eine elektrische Ansteuerung änderbar ist. Durch eine geeignete Ansteuerung der Laserdioden durch die Steueranordnung wird die periodische Intensitätsverteilung in einem Winkelbereich verschwenkt. Dadurch ist es möglich, die "Abstrahlkeule" zu scannen und somit eine räumliche Bewegung des Meßortes hervorzurufen. Laserdioden, deren Abstrahlrichtung sich durch eine elektronische Ansteuerung variieren läßt, sind beispielsweise aus Appl. Phys. Lett. 33 (8) vom 15. Oktober 1978, Seite 702 - 704, bekannt. Die Änderung der Abstrahlrichtung läßt sich durch die Änderung eines Verhältnisses I1/I2 von zwei Pumpströmen für die Laserdioden erreichen.

Die Erfindung soll im folgenden anhand eines in der Zeichnung dargestellten Ausführungsbeispiels näher erläutert werden. Es zeigen:

Figur 1 - den schematischen Aufbau einer Vorrichtung zur Geschwindigkeitsmessung mit einem Laserdioden-Array und je einer Detektionseinrichtung zur Detektion des vorwärts bzw. rückwärts gestreuten Lichts

Figur 2 - eine Darstellung der Intensitätsverteilung am Meßort

Figur 3 - schematisch den Aufbau eines Laserdioden-Arrays mit der zugehörigen Nahfeldverteilung

Figur 4 - eine schematische Darstellung eines zweidimensionalen Laserdioden-Arrays

Figur 5 - einen Aufbau gemäß Figur 1 mit einer Steueranordnung zum Verschwenken der Intensitätsverteilung.

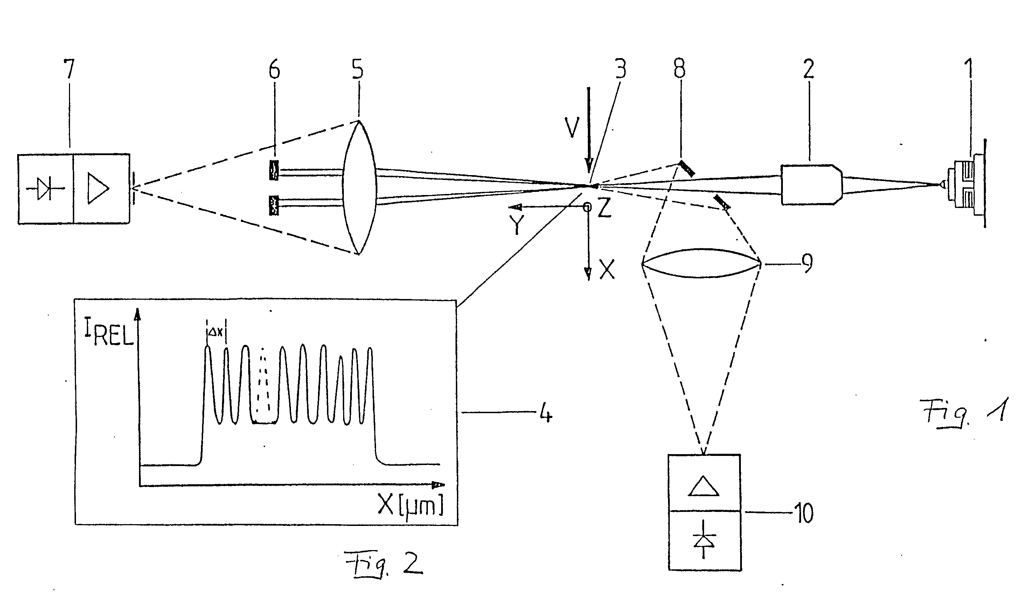

Figur 1 läßt erkennen, daß das von einem Laserdioden-Array 1, das anhand der Figur 3 näher erläutert wird, ausgesandte Licht von einer Fokussierungsoptik 2 auf einen Meßort fokussiert wird. Der Meßstrahl weist in Richtung x, die mit der Richtung der Strömungsgeschwindigkeit v eines Fluids übereinstimmt, eine Intensitäts-Nahfeldverteilung 4 auf, die in Figur 2 dargestellt ist. Entsprechend der Anzahl der Laserdioden des Laserdioden-Arrays sind Intensitätsmaxima vorhanden, die von dem mit Strömungsgeschwindigkeit v bewegten Partikel durchlaufen werden. Zur Auswertung des in Vorwärtsrichtung gestreuten Lichts dient eine in Vorwärtsrichtung angeordnete Linse 5, die das gestreute Licht auf den Eingang der als Avalanche-Diode ausgebildeten Fotodiode 7 fokussiert. Das durch das strömende Fluid transmittierte Licht des Meßstrahls wird von einer Strahlfalle 6 hinter der Linse 5 abgeblockt.

Zur zusätzlichen oder alternativen Auswertung des rückwärts gestreuten Lichts ist ein ringförmiger Spiegel 8 vorgesehen, dessen Ringmittelpunkt in der optischen Achse des Sendestrahls liegt, so daß dieser ungehindert durch den Ringspiegel 8 hindurchtreten kann. Das rückwärts gestreute Licht wird durch den schräggestellten Ringspiegel 8 ausgekoppelt und gelangt auf eine Linse 9, die das gestreute Licht auf den Eingang einer der Fotodiode 7 entsprechenden Fotodiode 10 fokussiert.

Die in Figur 2 dargestgellte Nahfeldverteilung zeigt die von einem linearen Laserdioden-Array 1 mit zehn Laserdioden erzeugte Nahfeldverteilung der Intensitätsmaxima, wobei eine vierte Laserdiode nicht ausstrahlt. Deren Strahlungsintensität für den Fall, daß sie ausstrahlen würde, ist in Figur 2 gestrichelt eingezeichnet. Da diese vierte Laserdiode nicht ausstrahlt, entsteht eine unsymmetrische Nahfeldverteilung, die für das gestreute Licht die Unterscheidung ermöglicht, ob das Teilchen die verbliebenen neun Intensitätsmaxima von links nach rechts oder von rechts nach links durchflogen hat.

Figur 3 verdeutlicht den Aufbau eines Laserdioden-Arrays 1, wie es in der Anordnung gemäß Figur 1 verwendet wird. Auf dem Laserdioden-Array sind sieben Laserdioden 11 in einem konstanten Abstand s voneinander linear benachbart angeordnet. Da die Laserdioden 11 auf einem gemeinsamen Substrat 12 angeordnet sind, ist ihre Strahlung im allgemeinen phasengekoppelt, wobei die Phasenverschiebung beispielsweise 0 oder 180 Grad sein kann. Eine Laserdiode 11′ der Laserdioden 11 strahlt nicht, beispielsweise weil sie defekt ist oder abgedeckt worden ist. Demzufolge weist die Nahfeldverteilung der ausgestrahlten Intensität an der Stelle der Laserdiode 11′ eine Lücke auf. Die Nachfeldverteilung ist in Figur 3 mit verdeutlicht. Sie weist sechs gleiche Intensitätsmaxima auf, die an sich einen räumlichen Abstand s voneinander haben, wobei die durch die nicht strahlende Laserdiode 11′ entstandene Lücke mitgerechnet wird. Diese Nahfeldverteilung wird über die Abbildung mit der Fokussierungsoptik 2 am Meßort 3 als eine der Figur 2 entsprechenden Nahfeldverteilung 4 abgebildet, wobei der Abstand der Intensitätsmaxima nunmehr $\Delta x = M \cdot s$ beträgt, wenn M den Abbildungsmaßstab angibt.

Das Laserdioden-Array 13 weist eine zweidimensionale Anordnung der Laserdioden 11 auf, wobei in dem dargestellten Ausführungsbeispiel sechs Streifen 14 von jeweils sieben Laserdioden 11 vorhanden sind. Jeder Streifen 14 entspricht dem einzigen Streifen des Laserdioden-Arrays 1. Die Streifen 14 weisen einen Abstand D voneinander auf. Das Laserdioden-Array führt zu einer Nahfeldverteilung von 6 × 7 Intensitätsmaxima, die in x-Richtung einen Abstand s und in z-Richtung einen Abstand D voneinander aufweisen. Mit dem Abbildungsmaßstab M wird diese Nahfeldverteilung auf den Meßort 3 abgebildet, so daß nicht nur die Messung der Geschwindigkeitskomponente in Richtung x, sondern auch die Messung der Geschwindigkeitskomponente in Richtung z möglich ist. Damit sind auch schräg in der Ebene x-z bewegte Partikel in ihrer wahren Geschwindigkeit meßbar. Auch das Laserdioden-Array 13 weist eine Anzahl von nicht strahlenden Laserdioden 11′ auf, deren Verteilung in dem Laserdioden-Array 13 sicherstellt, daß je nach Durchquerungsrichtung der durch das Laserdioden-Array 13 am Meßort 3 gebildeten Lichtschranken durch das jeweilige Partikel durch das gestreute Licht verschiedene Meßsignale entstehen, so daß die Strömungsrichtung der Partikel identifizierbar ist.

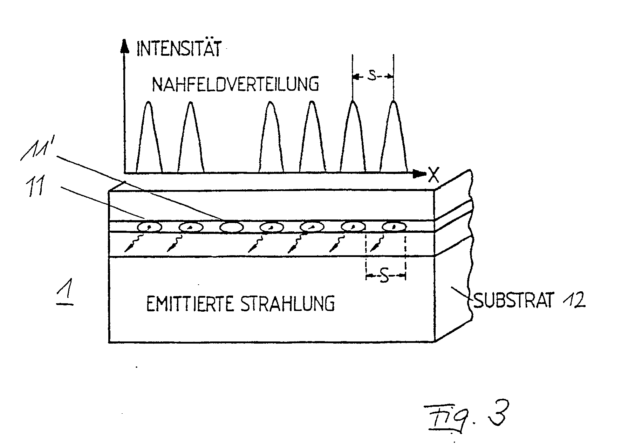

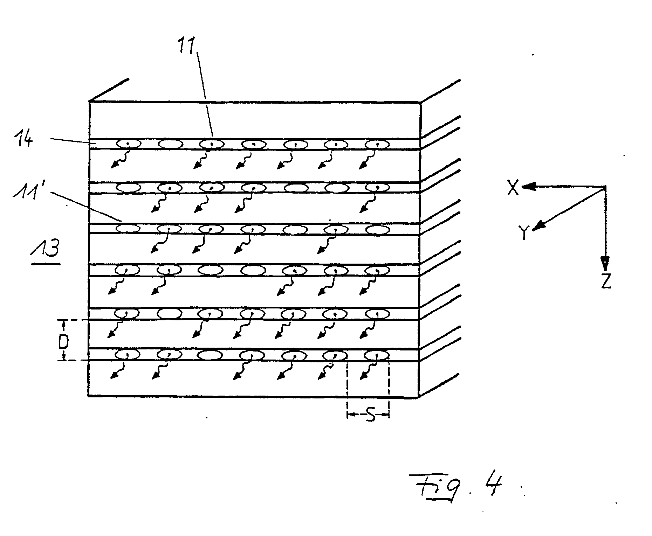

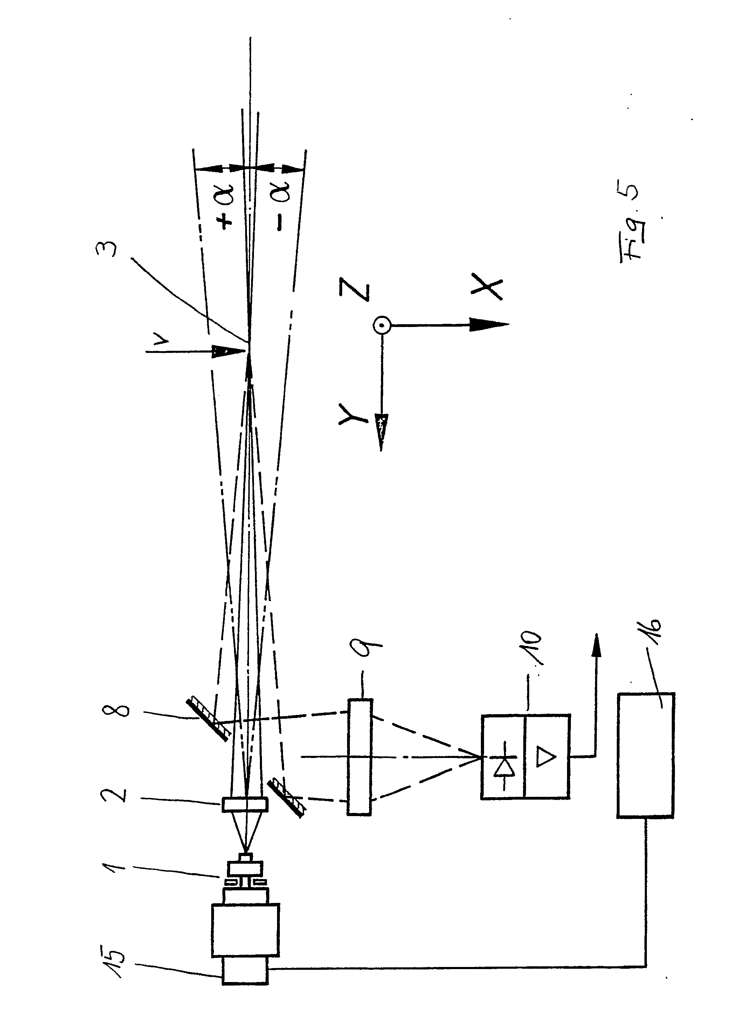

Figur 5 zeigt eine Anordnung, die im wesentlichen der Anordnung aus Figur 1 entspricht. Daher sind auch die gleichen Bezugsziffern verwendet worden.

Die Laserdioden 11 des Laserdioden-Arrays 1 werden hier über ein Netzwerk 15 durch eine Steueranordnung 16 so stromgesteuert, daß die einzelnen phasengekoppelten Laserdioden 11 des Laserdioden-Arrays 1 in einer vorbestimmten Abstrahlrichtung abstrahlen, so daß die durch das Laserdioden-Array 1 erzeugte Intensitätsverteilung am Meßort 3 in einem Winkelbereich $+\alpha, -\alpha$ einstellbar ist. Durch eine Variation der Ansteuerströme ist es möglich, die Intensitätsverteilung am Meßort 3 während der Messung wandern zu lassen. Hieraus ergibt sich eine Ergänzung der Meßmöglichkeiten mit der erfindungsgemäßen Vorrichtung, beispielsweise die Möglichkeit einer Richtungsdiskriminierung und des elektronischen Scannens zur Messung von Geschwindigkeitsfeldern, d. h. zur Erfassung von lokalen Geschwindigkeiten der verschiedenen Meßorten 3 im Winkelbereich $+\alpha, -\alpha$.

**Patentansprüche**

1. Vorrichtung zur Messung der Geschwindigkeit von lichtstreuenden Objekten mittels Laserstrahlen, mit denen am Meßort (3) eine periodische Intensitätsverteilung (4) erzeugt wird, und mittels einer Detektionseinrichtung (5, 7; 8, 9, 10) für vom Objekt gestreutes Licht, dadurch gekennzeichnet, daß eine reelle periodische Intensitätsverteilung (4) mit einem Laserdioden-Array (1, 13) erzeugt wird, auf dem eine Mehrzahl von Laserdioden (11) in einem definierten Abstand (s, D) voneinander angeordnet sind und dessen ausgesandtes Licht mit einer Fokussierungsoptik (2) auf den Meßort (3) fokussiert wird.

2. Vorrichtung nach Anspruch 1, dadurch gekennzeichnet, daß das Laserdioden-Array (13) als zweidimensionales, mehrstreifiges Array ausgebildet ist.

3. Vorrichtung nach Anspruch 1 oder 2, dadurch gekennzeichnet, daß das Laserdioden-Array (1, 13) an wenigstens einem solchen Platz (11') einer Laserdiode (11) nicht ausstrahlt, daß eine unsymmetrische Intensitätsverteilung am Meßort (3) erzeugt wird.

4. Vorrichtung nach einem der Ansprüche 1 bis 3, dadurch gekennzeichnet, daß das Laserdioden-Array (1,13) aus Laserdioden (11) besteht, deren Abstrahlrichtung durch eine elektrische Ansteuerung änderbar ist und daß eine Steueranordnung (16) vorgesehen ist, durch deren Ansteuerung der Laserdioden (11) die periodische Intensitätsverteilung (4) in einem Winkelbereich (+α,-α) verschwenkbar ist.

## Claims

1. A device for measuring the speed of light scattering objects by means of laser beams, with which a periodic intensity distribution (4) is produced at the measurement location (3), and by means of a detection device (5, 7; 8, 9, 10) for light scattered by the object, characterised in that a real, periodic intensity distribution (4) is produced by a laser diode array (1, 13), in which a plurality of laser diodes (11) are arranged at a defined interval (s, D) from one another and the transmitted light of which is focussed by a focussing optical device (2) onto the measurement location (3).

2. A device as claimed in Claim 1, characterised in that the laser diode array (13) is designed as a two-dimensional, multi-stripe array.

3. A device as claimed in Claim 1 or 2, characterised in that the laser diode array (1, 13) is non-transmissive at a minimum of one position (11') of a laser diode (11) such that an asymmetrical intensity distribution is produced at the measurement location (3).

4. A device as claimed in one of Claims 1 to 3, characterised in that the laser diode array (1, 13) comprises laser diodes (11), the direction of radiation of which can be changed by an electrical drive unit, and that a control arrangement (16) is provided which drives the laser diodes (11) in such manner that the periodic intensity distribution (4) can be pivoted in an angular range (+α, -α).

## Revendications

1. Dispositif pour mesurer la vitesse d'objets dispersant la lumière au moyen de rayons laser par lesquels, à l'endroit de mesure (3), une répartition d'intensité périodique (4) est produite, et au moyen d'un dispositif de détection (5, 7; 8, 9, 10) pour la lumière dispersée par l'objet, caractérisé en ce qu'une répartition d'intensité périodique réelle (4) est produite par un arrangement de diodes laser (1, 13), dans lequel plusieurs diodes laser (11) sont disposées à une distance définie (s, D) l'une de l'autre et la lumière qu'elles émettent est focalisée sur l'endroit de mesure (3) au moyen d'une optique de focalisation (2).

2. Dispositif suivant la revendication 1, caractérisé en ce que l'arrangement de diodes laser (13) a la forme d'un arrangement bidimensionnel multibande.

3. Dispositif suivant la revendication 1 ou 2, caractérisé en ce que l'arrangement de diodes laser (1, 13) n'émet pas à au moins un emplacement (11') d'une diode laser (11), de sorte qu'une répartition d'intensité asymétrique est produite à l'endroit de mesure (3).

4. Dispositif suivant l'une quelconque des revendications 1 à 3, caractérisé en ce que l'arrangement de diodes laser (1, 13) est formé de diodes laser (11) dont la direction d'émission peut être modifiée par une activation électrique et qu'un dispositif de commande (16) est prévu qui, par son activation des diodes laser (11), permet de faire pivoter la répartition d'intensité périodique (4) dans un domaine angulaire (+α, -α).

Fig. 1

Fig. 2

EP 0 291 708 B1

EP 0 291 708 B1

INTENSITÄT

NAHFELDVERTEILUNG

EMITTIERTE STRAHLUNG

SUBSTRAT 12

Fig. 3

Fig. 4

Fig. 5

EP 0 291 708 B1